(19) Europäisches Patentamt
European Patent Office
Office européen des brevets

(11) Numéro de publication : **0 079 837 B1**

(12) # FASCICULE DE BREVET EUROPÉEN

(45) Date de publication du fascicule du brevet : **21.01.87**

(51) Int. Cl.⁴ : **C 08 J 3/06**, C 08 L 5/00, C 08 L 33/00

(21) Numéro de dépôt : **82402080.4**

(22) Date de dépôt : **15.11.82**

(54) **Compositions à base de gommes hydrosolubles, leur préparation et leur utilisation.**

(30) Priorité : **16.11.81 FR 8121359**

(43) Date de publication de la demande : **25.05.83 Bulletin 83/21**

(45) Mention de la délivrance du brevet : **21.01.87 Bulletin 87/04**

(84) Etats contractants désignés : **BE CH DE FR GB IT LI NL SE**

(56) Documents cités :
**DE-A- 2 914 302**
**DE-A- 3 039 573**
**FR-A- 1 567 548**
**US-A- 3 056 757**
**US-A- 3 657 176**
**US-A- 3 657 182**
**US-A- 3 909 421**
**PATENTS ABSTRACTS OF JAPAN, vol. 2, no. 81, 28 juin 1982, page 1078C78;**
**CHEMICAL ABSTRACTS, vol. 75, no. 18, 1 novembre 1971, page 195, no. 113138t, Columbus Ohio (USA); I.V. RAKHIMOVA et al.: "Reaction of negative silica and alumina sols with synthetic polyelectrolytes"**
**Encyclopedia of Polymer Science and Technology, vol.7, pages 456-457**

**Le dossier contient des informations techniques présentées postérieurement au dépôt de la demande et ne figurant pas dans le présent fascicule.**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Chaux, Jean-Bernard**
**31, Chemin du Grand Bois**
**F-69160 Tassin-la-Demi-Lune (FR)**
Inventeur : **Gagne, Pierre**
**23bis, Chemin du Grand Bois**
**F-69160 Tassin-la-Demi-Lune (FR)**
Inventeur : **Garcia, Michel**
**4, rue Galipeau**
**F-92160 Antony (FR)**
Inventeur : **Lespinasse, Dominique**
**Au Batyfran**
**F-01480 Jassans Riottier (FR)**
Inventeur : **Roussos, Josiane**
**37, boulevard d'Argenson**
**F-92200 Neuilly/s/Seine (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

**EP 0 079 837 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention est relative à des compositions à base de gommes hydrosolubles, leur préparation et leur utilisation à la confection de sols. Plus précisément, elle se rapporte à des compositions à base de gommes naturelles, naturelles et modifiées ou synthétiques.

Dans l'exposé qui suit de la présente invention, on entend :

— par gomme : tout matériau polymère qui peut être dissous ou dispersé dans l'eau pour donner des solutions ou dispersions aqueuses que l'on dénommera « sol » ;

— par gommes naturelles : les polymères naturels dérivés de sources végétales ou animales ;

— par gommes naturelles modifiées : les polymères obtenus par modification de la structure chimique des polymères naturels ;

— par gommes synthétiques : les polymères obtenus entièrement par synthèse chimique.

Certaines de ces gommes en raison de leurs propriétés de viscosité et de leur rhéologie sont utilisées dans de nombreux domaines d'application aussi variés que le bâtiment, la peinture, le papier, le textile, la cosmétique, le forage pétrolier, l'industrie alimentaire, le traitement des eaux, le phytosanitaire, etc...

Pour de nombreuses applications il est nécessaire de mettre la gomme sous la forme de solution aqueuse. Or l'inconvénient que présente la plupart des gommes hydrosolubles, est d'être difficile à solubiliser. Sous l'effet d'une hydratation trop rapide, les grains au contact de l'eau, s'entourent d'un mince film gélifié et s'agglomèrent. Ces agglomérats ou grumeaux entourés de polymère partiellement gonflé en surface, se désagrègent et se dissolvent difficilement.

On a proposé d'améliorer la dispersabilité d'un polymère synthétique de type copolymère acrylique en traitant sa surface par des solutions de sels d'aluminium, de chrome, de zinc, de manganèse, de baryum, d'étain ou de zirconium dans un non-solvant du polymère puis en évaporant le solvant et à sécher la poudre ainsi obtenue (brevet français n° 2 310 156).

Le procédé de l'art antérieur nécessite un traitement particulier de la gomme à disperser. Il était donc souhaitable de perfectionner la mise en solution des gommes difficilement dispersables.

On a également proposé d'améliorer la dispersibilité des polymères hydrosolubles par enrobage à l'aide d'un agent tensioactif puis mélange avec du sulfate de soude anhydre (US-A-3.657.182).

Selon le brevet US-A-3.909.421 des milieux aqueux de viscosité élevée sont obtenus par dispersion simultanée à une solution aqueuse d'un polymère hydrosoluble et d'une argile hydratable.

Un des objectifs de l'invention est d'améliorer la facilité de dispersion de la gomme dans l'eau ainsi que d'augmenter la vitesse de dissolution, donc, la vitesse de développement de la viscosité des solutions obtenues, par adjonction d'additifs, tout en conservant à la gomme, ses propriétés rhéologiques.

Un autre objectif de l'invention est de disposer de la gomme sous la forme d'une poudre aisément manipulable, qui se dissolve bien et gonfle rapidement dans l'eau.

Enfin, un dernier objectif est d'obtenir les résultats souhaités en présentant la gomme sous forme de compositions « poudre » ayant la plus forte teneur en matière active.

La présente invention a pour objet des compositions à base de gommes hydrosolubles facilitant leur dissolution caractérisées par le fait qu'elles comprennent une gomme hydrosoluble choisie dans le groupe des gommes naturelles, des gommes naturelles modifiées, des polymères synthétiques à l'exclusion des biogommes et un matériau apportant l'eau qui peut être soit de l'eau liée ou d'adsorption, soit de l'eau de cristallisation, la quantité d'eau apportée par le matériau apportant l'eau étant telle que le rapport pondéral gomme/eau est comprise entre 6,5 et 1 et le rapport pondéral matériau apportant l'eau (en sec.)/eau est compris entre 0,3 et 2,6.

On a constaté de matière inattendue que, le fait d'associer la gomme avec un matériau capable de se lier à une quantité d'eau suffisante facilitant la dispersion de la gomme dans l'eau, conduisait à une augmentation de la vitesse de dissolution de la gomme.

Dans l'exposé qui suit de la présente invention, on précisera la nature des constituants des compositions de l'invention.

L'invention concerne des compositions facilitant la mise en solution des gommes telles que des gommes naturelles, naturelles et modifiées, synthétiques ou leurs mélanges.

Les gommes naturelles sont des produits largement décrits dans la littérature (R.L. Whistler, Industrial Gums. Polysaccharides and their derivatives, 2e Edition, Academic Press, 1973).

Parmi les gommes végétales susceptibles d'être mises en œuvre dans les compositions de l'invention, on peut citer :

— les gommes d'algues marines : agar-agar, algine, carraghénine, fucoïdine, laminarine ;

— les gommes d'exsudats végétaux : gomme arabique, ghatti, karaya, adragante ;

— les gommes de graines végétales : gomme de caroube, de lin, de tamarin, de guar ; de tara ;

— les gommes d'extraits végétaux : la pectine ;

— les amidons et les dextranes.

En ce qui concerne les gommes d'origine animale, on peut mentionner la gélatine et la caséine, plus particulièrement les caséinates. Pour une description plus complète de ces gommes, on se réfèrera pour la gélatine à l'ouvrage de Martin Glicksman, Gum Technology in the Food Industry, Academic Press, 1969, p. 359.

Dans la piste précitée, les gommes naturelles utilisées préférentiellement sont les suivantes : agar-agar, alginates, carraghénates, la gomme arabique, la gomme adragante, la gomme karaya, la gomme de caroube, la gomme de guar, la pectine, la gélatine.

L'agar-agar est extrait d'algues rouges (Gelidium sp.) au moyen d'eau bouillante. C'est un galactane sulfate linéaire : copolymère alterné d'β-D-galactopyranose (liaison β 1 → 4) et d'anhydro-3-6-α-L-galactopyranose (liaison α 1 → 3) porteur d'un petit nombre de groupements sulfate.

L'algine est un polysaccharide se trouvant dans des algues brunes (Macrocystis pyrifera-Laminaria digitata). Le plus courant est l'alginate de sodium qui est un copolymère linéaire à haut poids moléculaire contenant des unités d'acide β-D-mannopyranosyluronique (liaison 1 → 4) et d'acide α-L-gulopyranosyluronique (liaison 1 → 4).

Les carraghénines proviennent d'algues rouges (Chondrus crispus, Gigartina stellata) et sont des mélanges de polysaccharides que l'on peut fractionner en carraghénates-kappa, -lambda, -iota. Les carraghénates contiennent les unités prédominantes suivantes : sulfate-4-D-galactose (liaison 1 → 3) et anhydro-3,6 D-galactose (liaison 1 → 4) pour le carraghénate-kappa ; disulfate-2,6 D-galactose (liaison 1 → 4) et sulfate-2 D-galactose (liaison 1 → 3) pour le carraghénate-lambda ; sulfate-4 D-galactose (liaison 1 → 3) et sulfate-2 anhydro-3,6 D-galactose (liaison 1 → 4) pour le carraghénate-iota.

La gomme arabique est produite par des arbres appartenant à la famille des acacias (Acacia sp.). C'est un colloïde de structure branchée encore incomplètement élucidée. La chaîne principale est constituée de D-galactopyranose relié par des liaisons β(1 → 6) et β(1 → 4) : elle porte des chaînes latérales de D-galactopyranose, d'arabinose, de rhamnose et d'acide glucuronique attachées par des liaisons 1 → 3. Sa masse moléculaire en poids est de 200 000 à 300 000.

La gomme adragante provenant d'Astragalus gummifer est une substance de structure complexe qui comprend deux fractions : l'une est constituée d'acide galacturonique, d'arabinose et de xylose ; l'autre contient des acides polyméthoxylés. Elle a une masse moléculaire en poids élevée (840 000).

La gomme karaya est l'exsudat séché de l'arbre Stercula urens. Elle est constituée d'acides uroniques partiellement acétylés, de rhamnose, de galactose et d'autres oses : sa masse moléculaire dépasse 1 000 000.

La gomme de caroube provient des graines de Ceratonia siliqua. C'est un galactomannane de poids moléculaire d'environ 310 000 qui est essentiellement constitué par un polymère droit de D-mannose (liaison 1 → 4) avec des branchements latéraux constitués chacun d'un résidu galactose sur tous les quatre ou cinq groupements mannose attachés par des liaisons 1 → 6.

La gomme de guar est dérivée du Cyamopsis tétragonolobus de la famille des légumineuses. Sa masse moléculaire moyenne en poids est de 200 000 à 300 000. Sa structure est semblable à celle de la gomme de caroube et diffère seulement en ce que le nombre de chaînes latérales de D-galactose est plus grand.

La pectine se rencontre principalement dans les parois cellulaires et les espaces intercellulaires des tissus végétaux. La source commerciale de la pectine est constituée par les déchets des agrumes-albédo. La pectine peut être considérée comme un polymère linéaire de l'acide galacturonique dont une partie plus ou moins grande des groupements carboxyle sont estérifiés par des radicaux méthyle. En fonction de la teneur en groupements méthoxyle $—O—CH_3$, on classe les pectines. On distingue les pectines (H. M.) à haute teneur en groupements méthoxyle (70 % et plus des groupements carboxyle sont estérifiés) et les pectines (L. M.) à faible teneur en groupements méthoxyle (moins de 50 % des groupements carboxyle sont estérifiés). Le poids moléculaire des pectines est très variable de 1 000 à 100 000 et varie en fonction de la longueur de la chaîne qui peut comprendre quelques unités jusqu'à plusieurs centaines d'unités d'acide galacturonique.

Conviennent également à la mise en œuvre de l'invention, les gommes naturelles modifiées. La classe de ce type de gommes est illustrée par les dérivés cellulosiques, comme la méthylcellulose, l'éthylcellulose, l'hydroxyéthylcellulose, l'hydroxypropylcellulose, l'éthylhydroxyéthylcellulose, la carboxyméthylcellulose de sodium, la carboxyméthylhydroxyéthylcellulose de sodium ; par les amidons naturels modifiés par fractionnement séparant alors l'amylose et l'amylopectine, par réticulation réalisée par exemple à l'aide d'agent difonctionnel du type épichlorhydrine, anhydride d'acide linéaire dicarboxylique ou de formaldéhyde, par traitement enzymatique, acide, basique et/ou thermique ; par les dérivés d'amidons obtenus en substituant une certaine proportion de groupements hydroxyle par des groupements : acétate, hydroxyéthyle, hydroxypropyle, sulfate, phosphate.

Pour plus de précisions sur l'obtention de ces gommes naturelles modifiées, on pourra se reporter aux ouvrages précités de R. L. Whistler et M. Glicksman.

Enfin, on peut faire appel aux gommes synthétiques hydrosolubles. Cette famille de polymères est très vaste et pour la caractériser, on aura recours à la littérature, par exemple, aux ouvrages de Robert L. Davidson et Marshall Sittig, Water-Soluble Resins, 2ème Edition, Reinhold Book Corporation, 1968, et de N. M. Bikales, Water-Soluble Polymers, Plenum Press 1973 ou à l'encyclopédie « Encyclopedia Chemical Technology — Kirk Othmer ».

Appartiennent à cette catégorie de gommes hydrosolubles les polymères et copolymères vinyliques, acryliques, d'oxyde d'éthylène ainsi que leurs dérivés.

Plus précisément on peut citer les polymères suivants et leurs dérivés : les alcools polyvinyliques ; les

polyvinylpyrrolidones ; les éthers méthyliques de polyvinyle ; les acides polyacryliques et polyméthacryliques, leurs sels ou leurs esters : les polyacrylamides et les polyméthacrylamides ; les polymères d'oxyde d'éthylène.

Toutes les gommes synthétiques précitées sont des produits connus et commercialisés. On précisera le mode de préparation à titre illustratif sans pour autant limiter l'invention au polymère obtenu selon le procédé décrit.

L'alcool polyvinylique est commercialié dans 4 gammes de poids moléculaire : faible P. M. — 25 000 à 35 000 ; moyen P. M. — 120 000 à 150 000 ; haut P. M. — 170 000 à 220 000 ; très haut P. M. — 250 000 à 300 000. L'invention vise surtout les polymères à haut et très haut poids moléculaire qui présentent des difficultés à se solubiliser. Les alcools, sont préparés par alcoolyse de l'acétate polyvinylique obtenu à partir du monomère acétate de vinyle.

La polymérisation de l'acétate de vinyle est conduite selon les techniques conventionnelles soit en masse, soit en lit.

Le polymère d'acétate polyvinylique est alors dissous dans un solvant généralement le méthanol, puis soumis à une alcoolyse réalisée par catalyse acide ou basique. L'alcool polyvinylique insoluble dans le méthanol et dans l'acétate de méthyle, sous-produit de fabrication, précipite puis il est filtré, lavé, séché.

Les polyvinylpyrrolidones sont synthétisées par polymérisation en masse, en solution ou en suspension du monomère vinylpyrrolidone. La polymérisation peut être catalysée ioniquement par le trifluorure de bore, l'amidure de potassium ou avec des catalyseurs à radicaux libres tels que l'eau oxygénée, le peroxyde de benzoyle, l'azobisobutyronitrile.

Les acides acryliques et dérivés peuvent être polymérisée en masse, en solution aqueuse ou organique, en émulsion ou en dispersion aqueuse. Dans tous les cas, la polymérisation est effectuée au moyen d'un initiateur de polymérisation qui peut être un initiateur anionique, organométallique ou un radical libre produit par traitement thermique, par un système rédox ou sous l'effet d'une radiation.

La polymérisation des acides acrylique et méthacrylique en solution peut être conduite dans l'eau en chauffant le monomère en présence d'initiateurs tels que l'eau oxygénée, le persulfate de potassium, le peroxyde d'acétyle ou en polymérisant le monomère à une température plus basse entre 50 et 100 °C en initiant la réaction par un système rédox persulfate de potassium et thiosulfate de sodium. Une polymérisation similaire en solution aqueuse peut être conduite en irradiant la solution aqueuse par des rayons U. V.

On peut faire également, la polymérisation dans des solvants organiques comme le méthanol, le dioxanne en présence d'azobisisobutyronitrile et à haute température ou dans des solvants comme le benzène, le n-hexane avec comme initiateur le peroxyde de benzoyle, à température élevée, pour produire un polymère insoluble séparé du milieu par filtration.

Les sels des acides acrylique et méthacrylique peuvent être polymérisés en milieu aqueux en présence d'initiateurs mais la plupart du temps, on prépare les sels d'acides polyacryliques et homologues en neutralisant le polymère correspondant avec une base organique ou inorganique.

On peut également obtenir un homopolymère à partir d'acrylates et méthacrylates d'aminoalcoyle éventuellement quaternisés. Généralement ils sont mis en œuvre sous la forme de leur chlorure et polymérisent en solution aqueuse dans les mêmes conditions que l'acide acrylique.

On peut également mettre en œuvre les polymères acrylamide qui concernent une large classe de monomères, l'acrylamide, le méthacrylamide et tous les dérivés N-substitués.

L'acrylamide polymérise en solution aqueuse avec des initiateurs de radicaux libres tels que l'hydroperoxyde de t-butyle, l'eau oxygénée, les persulfates de métaux alcalins et d'ammonium, les chlorates, les perborates, les percarbonates. On utilise des systèmes rédox du type persulfate d'ammonium et métabisulfite de potassium pour polymériser à basse température et obtenir de haut poids moléculaires. Industriellement, la polymérisation est conduite en solution à 30-60 % de monomère, à une température de 30-60 °C, en utilisant un catalyseur représentant 0,01 à 10 % du poids de monomère à pH situé entre 3 et 6. La polymérisation dure de 3 à 6 heures. Le polymère est transformé en poudre selon les techniques usuelles : atomisation ou précipitation par les alcools inférieurs.

On peut aussi polymériser l'acrylamide en utilisant d'autres initiateurs composés azo, systèmes photochimiques, rayons X, U. V.

En ce qui concerne les polymères d'oxyde d'éthylène, l'invention concerne ceux de hauts poids moléculaires supérieurs à 100 000. Les polyoxyéthylènes sont obtenus par polymérisation de l'oxyde d'éthylène en présence de catalyseurs tels que les oxydes et carbonates d'alcalino-terreux, les hydrates de chlorure, bromure et acétate ferrique, les alcoyl- et les alcoyloxy- d'aluminium, de zinc, magnésium, calcium.

A côté des homopolymères précités, on peut également mettre en œuvre des copolymères solubles produits par copolymérisation de monomères hydrophiles. Par exemple, on peut copolymériser l'anhydre maléique, l'acide itaconique, l'acrylamide, le méthacrylamide, l'acrylonitrile ou le méthacrylonitrile, les acides acryliques et méthacryliques, leurs sels et esters, les acrylates et méthacrylates d'aminoalcoyle éventuellement quaternisés, l'oxyde de méthyle et de vinyle.

Les polymères ou copolymères auxquels on fait appel dans les compositions de l'invention peuvent donc être de natures très diverses dès lors qu'ils sont solubles en milieu aqueux.

Conviennent particulièrement bien à la mise en œuvre de l'invention les polymères ou copolymères de dérivés acryliques tels que l'acrylamide, le méthacrylamide, les acides acryliques et leurs sels, et esters, les acrylates et méthacrylates d'aminoalcoyle éventuellement quaternisés qui sont obtenus selon le procédé décrit dans le brevet français 2 348 227 et qui consiste :

— à déposer en continu et en couche mince sur un support, une solution aqueuse de monomère acrylique contenant un promoteur de photopolymérisation en particulier la benzoïne et ses éthers méthylique, éthylique, isopropylique à raison de 0,005 à 1 % en poids par rapport au monomère de préférence 0,01 à 0,5 %, ladite solution contenant moins de 1 mg d'oxygène par litre de solution de préférence moins de 0,5 mg/l ;

— à soumettre la couche mince liquide à irradiation par un rayonnement de longueurs d'onde comprise entre 300 et 450 nm, de préférence entre 330 et 400 nm, pendant une durée allant de 1 à 20 min., de préférence 3 à 7 min., la puissance moyenne du rayonnement actif étant comprise entre 20 et 300 watts/$m^2$ l'atmosphère gazeuse recouvrant la solution soumise à photopolymérisation ayant une teneur en oxygène inférieure à 5 % en volume, de préférence inférieure à 0,5 %, le support étant refroidi pour éliminer les calories issues de la polymérisation ;

— à maintenir la couche mince ayant subi un début de polymérisation au cours de la phase précédente, sur le support refroidi et en atmosphère débarrassée d'oxygène et à la soumettre à une irradiation par un rayonnement de longueurs d'onde comprises entre 300 et 450 nm pendant une durée allant de 1 à 20 min. de préférence 3 à 10 nm, la puissance moyenne du rayonnement actif étant supérieure à 300 et inférieure à 2 000 watts/$m^2$ ;

— à détacher la couche mince non liquide ainsi obtenue du support et à la soumettre à l'air, à une irradiation par un rayonnement de longueurs d'onde comprises entre 300 et 450 nm, de préférence entre 330 et 400 nm pendant une durée allant de 30 min. à 3 h, de préférence de 40 min. à 90 min. la puissance moyenne du rayonnement actif étant comprise entre 20 et 500 watts/$m^2$.

Le matériau apportant l'eau, amène de l'eau qui peut être soit de l'eau liée ou d'adsorption, soit de l'eau de cristallisation. Appartiennent à la première catégorie de matériaux, les silices et les alumines hydratées mises en œuvre seules ou en mélange sous n'importe quelle forme naturelle ou synthétique.

C'est ainsi que l'on peut faire appel à des silices fines précipitées, se présentant sous la forme de particules fines à grande surface. Plus particulièrement, on a recours à des silices qui présentent une surface BET comprise entre 200 et 400 $m^2$/g. (La surface BET est déterminée selon la méthode de Brunauer-Emmett-Teller décrite dans « The Journal of the American Chemical Society » *60*, page 309, Février 1938). Le diamètre des particules ultimes de silice varient entre 20 et 80 nm.

Conviennent, également à l'invention les gels de silice hydratés en particulier les trois principaux types de gels suivants qui sont : les gels avec une surface BET de 750-800 $m^2$/g, un volume poreux de 0,37-0,40 $cm^3$/g, un diamètre moyen de particules de 2,2-2,6 nm (22-26 Å) ; les gels avec une surface BET de 300-350 $m^2$/g, un volume poreux de 0,9-1,1 $cm^3$/g, un diamètre moyen de particules de 12-16 nm (120-160 Å) ; les gels ayant une surface BET de 100-200 $m^2$/g, un volume poreux de 1,4-2,0 $cm^3$/g, un diamètre moyen de particules de 18-22 nm (180-220 Å).

On peut aussi utiliser les gels de silice déshydratés qui présentent des surfaces BET de 10 à 500 $m^2$/g ayant un volume poreux de 0,5 à 1,1 $cm^3$/g et un diamètre poreux moyen variant de 3 à 300 nm (30 à 3 000 Å), de préférence de 60 à 300 nm (600 à 3 000 Å). Un traitement d'autoclavage décrit dans le brevet français 2 093 176 d'amener la silice, à la surface désirée.

Le matériau apportant l'eau peut être un hydrate d'alumine sous les deux formes d'hydratation : $Al_2O_3$, $3H_2O$ et $Al_2O_3$, $H_2O$. On peut les mettre en œuvre sous forme naturelle : hydrargillite ou gibbsite, bayerite, nordstrandite, bohmite, diaspore ou sous leur forme synthétique. On peut donc utiliser des gels d'alumine séchés du type bohmite qui présentent une surface de 200 à 400 $m^2$/g et des pores de 5 à 10 nm (50 à 100 Å) ou les différents produits commercialisés en particulier, l'$\alpha$-trihydrate obtenu selon le procédé BAYER ayant des particules sphéroïdales avec des dimensions de 20 à 150 $\mu$m.

Tous les composés précités sont des produits connus et décrits par exemple, dans l'encyclopédie « Encyclopedia Chemical Technology — Kirk Othmer — Volume 2 ».

On peut également faire appel aux silicates d'aluminium hydratés sous la forme des argiles, des zéolithes naturelles ou des zéolithes synthétiques.

Comme exemples d'argiles susceptibles d'être employées, on peut citer celles qui appartiennent aux groupes suivants :

— type kaolin ; kaolinite, dickite, nacrite, anauxite, halloysite, endelitte ;

— type serpentine ; chrysolite, amésite, cronstedite, chamosite, garnierite ;

— type montmorillonite : montmorillonite (bentonite), beidellite, nontronite, hectorite, saponite, sauconite ;

— type vermiculite ou chlorite ;

— l'attapulgite ou la sépiolite.

On peut mettre en œuvre des zéolithes naturelles telles que : analcime, harmotome, phillipsite, gismondine, laumontite, erionite, offretite, levynite, faujasite, chabazite, gmelinite, natrolite, scolecite, mésolite, thomsonite, edingtonite, mordénite, ferrierite, epistilbite, heulandite, clinoptilolite, stilbite, brewsterite. D'une manière préférentielle, on choisit la faujasite ou la mordénite.

En ce qui concerne les zéolithes synthétiques, on peut utiliser les zéolithes commercialisées et qui

sont : les zéolithes de type A, X, Y, L et celles qui reproduisent la structure de la mordénite, la chabazite et l'érionite.

Les zéolithes X, Y présentent, généralement une surface BET de 800 $m^2/g$ et un volume poreux respectivement de 0,36 $cm^3/g$ et 0,34 $cm^3/g$.

Les zéolithes de type A, plus particulièrement de type 4A ont une surface BET inférieure à 10 $m^2/g$ et un volume poreux de 0,30 $cm^3/g$.

Pour une description détaillée des silicates d'aluminium hydratés, on se réfèrera à la littérature : par exemple, pour les argiles à l'Encyclopédie « Encyclopedia Chemical Technology — Kirk Othmer — Volume 5 » et pour les zéolithes naturelles et synthétiques à l'ouvrage de Donald W. Breck — Zeolite Molecular Sieves, A-Wiley Interscience Publication — 1974.

Enfin comme matériau apportant l'eau, on peut également avoir recours aux hydrates des sels minéraux ou organiques des métaux, plus particulièrement des métaux alcalins ou alcalino-terreux. Plus spécifiquement, on peut citer les hydrates des sels suivants ou dérivés mis en œuvre seuls, en mélange ou sous forme de combinaisons : les carbonates, les halogénures, les nitrates, les phosphates, les silicates, les sulfates ainsi que les acétates, les citrates, les lactates, les laurates, les tartrates des sels de sodium, potassium, calcium, magnésium.

A titre d'exemples spécifiques, on peut nommer :

— acétate de sodium trihydraté : $NaC_2H_3O_2$, $3H_2O$
— carbonate de sodium heptahydraté : $Na_2CO_3$, $7H_2O$
— carbonate de sodium décahydraté : $Na_2CO_3$, $10H_2O$
— citrate de sodium pentahydraté : $Na_3C_6H_5O_7$, $5{,}5H_2O$
— orthophosphate de sodium dodécahydraté : $Na_3PO_4$, $12H_2O$
— tartrate de magnésium et de sodium décahydraté : $Na_2Mg(C_4H_4O_6)_2$, $10H_2O$
— sulfate de sodium heptahydraté : $Na_2SO_4$, $7H_2O$
— sulfate de sodium décahydraté : $Na_2SO_4$, $10H_2O$
— chlorure de potassium et de magnésium hexahydraté : KCl, $MgCl_2$, $6H_2O$
— carbonate de calcium hexahydraté : $CaCO_3$, $6H_2O$
— chlorure de calcium hexahydraté : $CaCl_2$, $6H_2O$
— lactate de calcium pentahydraté : $Ca(C_3H_5O_3)_2$, $5H_2O$
— nitrate de calcium tétrahydraté : $Ca(NO_3)_2$, $4H_2O$
— tartrate de calcium tétrahydraté : $CaC_4H_4O_6$, $4H_2O$
— acétate de magnésium tétrahydraté : $Mg(C_2H_3O_3)_2$, $4H_2O$
— carbonate de magnésium pentahydraté : $MgCO_3$, $5H_2O$
— chlorure de magnésium hexahydraté : $MgCl_2$, $6H_2O$
— nitrate de magnésium hexahydraté : $Mg(NO_3)_2$, $6H_2O$
— orthophosphate de magnésium octahydraté : $Mg_3(PO_4)_2$, $8H_2O$
— sulfate de magnésium heptahydraté : $MgSO_4$, $7H_2O$
— tartrate de magnésium pentahydraté : $MgC_4H_4O_6$, $5H_2O$

Dans l'ensemble des matériaux apportant l'eau précités, on choisit préférentiellement les silices fines précipitées qui sont capables d'adsorber 2 ou 3 fois leur poids d'eau.

Poursuivant ses recherches, la demanderesse a trouvé que les résultats obtenus étaient le plus souvent supérieurs lorsque l'on adjoignait un troisième additif tel qu'un tensio-actif de type anionique et/ou non ionique.

Une forme de réalisation préférentielle de l'invention consiste donc en des compositions à base de gomme hydrosoluble à dissolution améliorée caractérisées par le fait qu'elles comprennent outre la gomme hydrosoluble, un matériau apportant l'eau ou susceptible de la retenir par adsorption, un tensio-actif anionique et/ou non ionique.

On a noté de manière surprenante, que les compositions de l'invention amélioraient la mise en solution de la gomme et ceci, d'autant plus que celle-ci présentait au départ plus de difficultés à se solubiliser.

Pour le choix de l'agent tensio-actif, on peut se reporter, entre autres, à l'encyclopédie « Encyclopedia Chemical Technology — Kirk Othmer — Volume 19 » ou aux différents ouvrages de la Série Surfactant Sciences Series, Marcel Dekker Inc — Vol. 1 : Nonionic Surfactants de Martin J. Schick — Vol. 7 : Anionic Surfactants de Warner M. Linfield ou à l'ouvrage de Mc. Cutcheons's : Detergents and Emulsifiers — International and North American Edition.

Comme exemples d'agents tensio-actifs anioniques utilisables, on peut citer :

— les savons de métaux alcalins tels que les sels sodiques ou potassiques d'acides gras saturés ou insaturés ayant de 8 à 24 atomes de carbone et de préférence de 14 à 20 ou des dérivés d'acides aminocarboxyliques comme le N-lauryl sarconisate de sodium, le N-acylsarconisate de sodium.

— les sulfonates alcalins tels que les alcoylsulfonates, les arylsulfonates ou les alcoylarylsulfonates ; en particulier les alcoylsulfonates tels que par exemple les diesters de l'acide sulfosuccinique comme le diéthylhexylsulfosuccinate de sodium, le dioctylsulfosuccinate de sodium, les alcoylbenzènesulfonates de formule $R_1—C_6H_4SO_3M_1$ dans laquelle le radical $R_1$ est un radical alcoyle linéaire ou ramifié contenant de 8 à 13 atomes de carbone tel que par exemple un radical nonyle, dodécyle, tridécyle et $M_1$ représente un atome de sodium, de potassium, un radical ammonium, de la diéthanolamine ou de la

triéthanolamine ; les alcoylnaphtalènesulfonates de formule $(R)_{no}—C_{10}H_{7—no}SO_3M_1$ dans laquelle le radical R est un radical alcoyle linéaire ou ramifié contenant de 1 à 4 atomes de carbone tel que par exemple un radical méthyle, isopropyle, isobutyle et $M_1$ ayant la signification donnée précédemment. D'autres sulfonates peuvent être employés tels que les N-acyl, N-alcoyltaurates de formule $R_2—CO—N(R'_2)—CH_2—CH_2—SO_3Na$ où $R_2$ est un radical alcoyle ayant de 11 à 18 atomes de carbone et $R'_2$ est un radical méthyle, éthyle : comme par exemple le N-oléoyl, N-méthyltaurate ou le N-palmitoyl, N-méthyltaurate de sodium : les oléfines sulfonées résultant de la sulfonation des coupes d'oléfines linéaires de $C_{14}$ à $C_{18}$.

Les sulfates et les produits sulfatés : parmi les sulfates d'alcoyle répondant à la formule $R_3OSO_3M_1$, on peut citer ceux où le radical $R_3$ est un radical lauryle, cétyle, myristyle et $M_1$ ayant la signification donnée précédemment : les huiles et graisses naturelles sulfatées ; le sel disodique de l'acide oléique sulfaté ; les alcools gras polyxyéthylénés et sulfatés de formule $R_4—(O—CH_2—CH_2)_{n1}—OSO_3M_1$ dans laquelle le radical $R_4$ est un radical alcoyle contenant de 6 à 16 atomes de carbone tel que par exemple un radical myristyle ou un radical alcoyle linéaire ou ramifié comme par exemple un radical hexyle, octyle, décyle, dodécyle, $n_1$ est le nombre de moles d'oxyde d'éthylène pouvant varier de 1 à 4 et $M_1$ ayant la signification donnée précédemment ; les alcoylphénols polyoxyéthylénés et sulfatés de formule $R_5—C_6H_4—(O—CH_2—CH_2)_{n2}—OSO_3M_1$ dans laquelle le radical $R_5$ est un radical alcoyle linéaire ou ramifié contenant de 8 à 13 atomes de carbone tel que par exemple un radical octyle, nonyle, dodécyle, $n_2$ est le nombre de moles d'oxyde d'éthylène pouvant varier de 1 à 6 et $M_1$ ayant la signification donnée précédemment.

— les phosphates alcalins : les mono- ou diesters de l'acide orthophosphorique ou l'un de ses sels qui peuvent être représentés pour les phosphates d'alcoyle par la formule $(R_6O)PO(OM_2)_2$ et pour les phosphates de dialcoyle par la formule $(R_6O)_2PO(OM_2)$ dans lesquelles le radical $R_6$ est un radical alcoyle linéaire ou ramifié contenant de 6 à 12 atomes de carbone et $M_2$ représente un atome d'hydrogène, de sodium ou de potassium. A titre d'exemples de radical $R_6$, on peut citer le n-hexyle, n-octyle, n-éthylhexyle, diméthylhexyle, n-décyle, diméthyloctyle, triméthylheptyle, tri-méthylnonyle ; les mono- ou diesters de l'acide orthophosphorique ou l'un de ses sels, polyoxyéthylénés qui peuvent être représentés pour les phosphates d'alcoyle polyoxyéthylénés par la formule

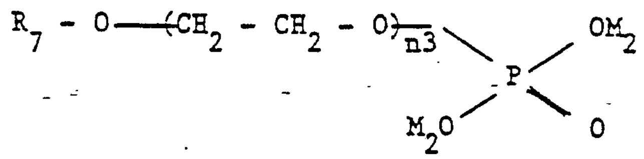

et pour les phosphates de dialcoyle polyoxyéthylénés par la formule

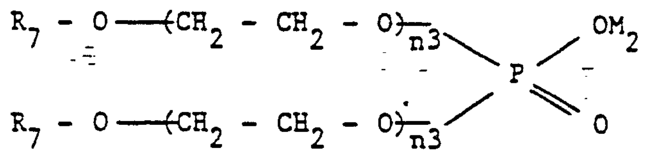

dans lesquelles le radical $R_7$ représente un radical alcoyle linéaire ou ramifié ayant de 6 à 12 atomes de carbone, un radical phényle, un radical alcoylphényle avec une chaîne alcoyle ayant de 8 à 12 atomes de carbone, $n_3$ est le nombre d'oxyde d'éthylène pouvant varier de 2 à 8 et $M_2$ ayant la signification donnée précédemment. Comme exemples de radical $R_7$, on peut nommer le radical hexyle, octyle, décyle, dodécyle, nonylphényle.

Comme agents tensio-actifs non ioniques, on peut faire appel d'une manière générale à des composés obtenus par condensation d'oxyde d'alcoylène avec un composé organique qui peut être aliphatique ou alcoylaromatique. Les tensio-actifs non ioniques appropriés sont :

— les alcoylphénols polyoxyéthylénés par exemple les produits de condensation d'oxyde d'éthylène à raison de 5 à 25 moles par mole d'alcoylphénol, le radical alcoyle étant droit ou ramifié et contenant de 6 à 12 atomes de carbone. On peut citer tout particulièrement le nonylphénol condensé avec environ 10 à 30 moles d'oxyde d'éthylène par mole de phénol, le dinonylphénol condensé avec 15 moles d'oxyde d'éthylène par mole de phénol, le dodécylphénol condensé avec 12 moles d'oxyde d'éthylène par mole de phénol.

— les alcools aliphatiques polyoxyéthylénés résultant de la condensation avec l'oxyde d'éthylène à raison de 5 à 30 moles d'oxyde d'éthylène, d'alcools gras linéaires ou ramifiés contenant de 8 à 22 atomes de carbone : par exemple le produit de condensation d'environ 15 moles d'oxyde d'éthylène avec 1 mole de tridécanol ou d'alcool de coprah : l'alcool myristylique condensé avec 10 moles d'oxyde d'éthylène.

— les amides gras tels que par exemple le diéthanolamine d'acides gras éventuellement polyoxyéthylénés comme l'acide laurique ou de l'huile de coco,

— les dérivés polyoxyéthylénés et polyoxypropylénés : une illustration de ce type de tensio-actifs

sont les produits bien connus vendus sous le nom de « PLURONICS ». On les obtient par addition séquentielle d'oxyde de propylène puis d'oxyde d'éthylène sur un composé à hydrogène réactif de bas poids moléculaire tel que par exemple, le propylèneglycol.

Afin que le tensio-actif s'incorpore facilement aux compositions de l'invention, il est introduit sous forme solide, de préférence pulvérulente.

Les tensio-actifs se présentent sous forme solide et le plus couramment sous forme liquide. Dans le cas d'un tensio-actif liquide, il doit être déposé sur un support pulvérulent capable de l'adsorber et de le désorber, chimiquement inerte, insoluble ou soluble. On peut l'adsorber directement sur la poudre constituée par le matériau apportant l'eau éventuellement additionné d'eau.

D'une manière préférentielle on choisit un tensio-actif solide tel que les alcoylnaphtalènesulfonates de sodium en particulier le diisopropylnaphtalènesulfonate de sodium.

Les proportions des différents constituants des compositions de l'invention sont difficiles à définir d'une manière générale car elles dépendent de la nature de ces constituants.

On déterminera aisément les proportions dans chaque cas particulier en faisant varier les paramètres de la manière qui suit.

Pour un système donné, gomme, matériau apportant l'eau, tensio-actif, on prépare différentes compositions en faisant varier les rapports pondéraux gomme/eau et matériau apportant l'eau/eau, la teneur en tensio-actif restant constante, puis on confectionne les sols en teneur constante en gomme (0,5 % en poids).

On trace le graphique représentant la variation de la viscosité des sols en fonction du rapport gomme/eau. On détermine le rapport gomme/eau qui permet d'obtenir la vitesse de développement de la viscosité, la plus grande.

Le rapport gomme/eau étant fixé, on va définir le rapport matériau apportant l'eau/eau. Ce rapport sera essentiellement fonction du coefficient d'adsorption du matériau : il faut que le matériau chargé d'eau conduise à une poudre pulvérulente et non pas à une pâte.

De même on déterminera la teneur optimale en tensio-actif dans la composition en traçant le graphique exprimant la variation de la viscosité des sols en fonction de différentes teneurs en tensio-actif tout en maintenant le rapport gomme/eau constant.

Afin de fixer un ordre de grandeur, on précisera que les proportions des constituants peuvent être choisis dans les limites suivantes :

La quantité d'eau présente dans lesdites compositions et apportée par le matériau apportant l'eau exprimée par le rapport pondéral (gomme/eau) peut varier dans de larges limites allant de 6,5 à 1, de préférence 2,5 à 1.

La limite inférieure ne présente aucun caractère critique. Par contre, il est préférable que le rapport ne dépasse pas 4.

La quantité de matériau apportant l'eau est définie par le rapport pondéral [matériau apportant l'eau (en sec)/eau] qui est de préférence compris entre 0,3 et 0,6 bien qu'il puisse être choisi dans une gamme plus large allant de 0,3 à 2,6.

La quantité de tensio-actif mise en jeu définie par le rapport entre le poids du tensio-actif et le poids total de la composition de l'invention peut varier entre 0 et 0,10. La limite supérieure n'a aucun caractère critique mais il n'y a aucun intérêt à atteindre des rapports pondéraux supérieurs à 0,25. Préférentiellement, la quantité de tensio-actif est choisie de telle sorte que ledit rapport soit compris entre 0,03 et 0,07.

On donne, ci-après, des exemples de compositions à base de gomme selon l'invention :

de 30 à 70 % en poids de gomme hydrosoluble
de 7 à 40 % en poids d'un matériau apportant l'eau
de 0 à 10 % en poids d'un tensio-actif anionique et/ou non ionique
de 15 à 37 % en poids d'eau.

Les compositions préférées sont les suivantes et contiennent :

de 50 à 60 % en poids de gomme hydrosoluble
de 8 à 15 % en poids d'un matériau apportant l'eau
de 3 à 7 % en poids d'un tensio-actif anionique et/ou non ionique
de 24 à 36 % en poids d'eau.

Pour ce qui est de la préparation des compositions de l'invention, elle varie légèrement selon que l'eau de la composition est de l'eau amenée par apport extérieur ou de l'eau de cristallisation et selon que le tensio-actif se trouve sous forme solide ou liquide.

Le procédé de préparation des compositions de l'invention consiste à mélanger à sec le matériau apportant l'eau sur lequel éventuellement, on a adsorbé de l'eau, avec la gomme et éventuellement à ajouter un tensio-actif anionique et/ou ionique.

La première opération qui est l'imprégnation du matériau apportant l'eau, avec l'eau concerne les matériaux suivants : les silices fines précipitées, les gels de silice déshydratés, les hydrates d'alumine et les silicates d'aluminium hydratés. On ajoute progressivement, sous agitation, l'eau sur le matériau

apportant l'eau. Elle n'est pas réalisée lorsque l'on choisit, à titre de matériaux apportant l'eau, les gels de silice hydratés, les hydrates de sels minéraux ou organiques.

Le matériau apportant l'eau est sous la forme d'une poudre virtuellement « sèche » même lorsqu'il a subi une imprégnation à l'eau.

On effectue ensuite son mélange avec la gomme dans un mélangeur à poudres de type connu par exemple les mélangeurs à chute libre du type tambour, les mélangeurs verticaux ou horizontaux à vis hélicoïdale ou les mélangeurs horizontaux type Lödige.

L'introduction d'un tensio-actif dans la composition de l'invention se fait, lorqu'il est solide, dans le mélange constitué par le matériau apportant l'eau et la gomme.

Si le tensio-actif se présente sous forme liquide, il est généralement adsorbé sur le matériau apportant l'eau simultanément ou successivement à l'eau puis on effectue ensuite le mélange avec la gomme.

Une fois tous les composants introduits dans le mélangeur, on poursuit le mélange. La durée de l'opération est fonction de l'appareil utilisé et sera aisément déterminée par l'homme de métier de telle sorte qu'il obtienne un mélange homogène.

Le procédé de l'invention conduit à l'obtiention de compositions sous la forme d'une poudre ayant une excellente stabilité au stockage.

Conformément à l'invention, on prépare des sols avec les compositions de l'invention.

La confection desdits sols est réalisée, simplement, par addition de la composition poudre au milieu aqueux mis sous agitation, par des moyens classiques d'agitation, par exemple agitation à ancre, à hélice ou à turbine.

L'introduction de la composition de l'invention dans le milieu aqueux peut se faire rapidement en une seule fraction sans inconvénient. Elle ne nécessite pas de précautions particulières.

La quantité de composition introduite est telle que, généralement, la concentration du sol en gomme hydrosoluble varie de 0,3 à 10 % en poids.

On maintient ensuite l'agitation jusqu'à obtention d'une viscosité constante : habituellement, des durées variant de 10 à 30 minutes suffisent.

Grâce à la mise de la gomme sous la forme des compositions de l'invention, on note une amélioration de la mise en solution de la gomme ainsi qu'une augmentation de la vitesse de développement de la viscosité maximale des sols obtenus.

On remarquera que les sols obtenus avec les compositions de l'invention sont parfaitement stables dans les conditions habituelles de stockage.

Pour permettre de mieux illustrer la mise en œuvre de l'invention on donne ci-après différents exemples, bien entendu non limitatifs.

Avant de détailler les exemples, on précisera les conditions opératoires de préparation des compositions de l'invention et de leurs sols : conditions reproduites dans tous les exemples sauf stipulation contraire.

Le mode de préparation des compositions est le suivant :

— on fait adsorber l'eau, si nécessaire, au matériau apportant l'eau, dans le rapport choisi. Pour ce faire, dans un bécher contenant ledit matériau, on verse lentement l'eau sous agitation,

— on additionne la gomme hydrosoluble au matériau imprégné d'eau et on mélange,

— enfin, on ajoute le tensio-actif solide,

— on homogénéise la composition pendant une durée d'une heure dans un mélangeur à poudres.

Les conditions de préparation des sols sont les suivantes : pour chaque essai, on confectionne 400 g de sol :

— dans un bécher équipé d'un système d'agitation du type cadre tournant à la vitesse de 100 tours/minute, on introduit 400 g d'eau qui est de l'eau de ville ayant une dureté de 25 °HT (soit 100 mg/l d'ions $Ca^{++}$),

— on verse rapidement la composition en poudre en quantité voulue : la durée d'addition étant inférieure à 30 secondes,

— on maintient l'agitation jusqu'à obtention d'une viscosité constante.

Il y a lieu de noter que le test de mise en solution est rendu sévère par le choix de conditions douces d'agitation et permet ainsi de suivre l'amélioration de la dispersabilité : toute vitesse supérieure ne pourra être que bénéfique.

L'agitateur utilisé est une pale cadre qui est placée dans la solution de telle façon que la partie supérieure affleure la surface de l'eau de manière à aider le mouillage de la poudre versée sur l'eau.

Les exemples suivants illustrent différentes compositions de l'invention, contenant un tensio-actif. On compare les propriétés des sols obtenus avec les compositions de l'invention à des sols ne contenant que la gomme hydrosoluble.

Dans tous les exemples, les pourcentages sont exprimés en poids.

Exemples 1 à 6

Essais A à F

Les exemples qui suivent, illustrent la mise en œuvre des gommes naturelles suivantes :

- — alginate de sodium
- — gomme arabique
- — gomme adragante
- — gomme de caroube
- — pectines (L. M.) et (H. M.).

1) Préparation des compositions à base de gommes naturelles

On réalise les compositions de l'invention contenant les gommes naturelles précitées et à titre de matériau apportant l'eau, une silice précipitée légère et un tensio-actif anionique qui est un diisopropylnaphtalènesulfonate de sodium.

Toutes les compositions réalisées ont la formulation suivante :

60 % de la gomme hydrosoluble
11,65 % d'une silice précipitée (Tixosil 38A)
5 % de diisopropylnaphtalènesulfonate de sodium (Supragil WP)
23,35 % d'eau de ville.

Les caractéristiques des constituants sont données ci-après.

L'alginate de sodium utilisé est un produit purifié, extrait des algues marines du genre Laminaria et commercialisé sous la marque Aqualgine.

La gomme arabique et la gomme adragante sont des produits commercialisés par la Société Iranex.

La gomme de caroube utilisée est le produit commercialisé Vidogum L. Sa masse moléculaire est de 100 000 et sa composition est la suivante : galactomannanes = 75-80 % dont 15-20 % de galactose et 80-85 % de mannose ; lipides = 0,8-1,2 ; protéines = 5,3-5,6 ; partie fibreuse = 0,8-1,3 ; perte au séchage = 12,0-14,0 ; cendres totales = 0,9-1,3.

Les pectines (L. M.) et (H. M.) sont des produits commercialisés par Unipectine respectivement sous les références 325 NH 95 et RS 150° (Rapid Set 150° Sag). Les pectines (L. M.) ont un pourcentage d'estérification de 26 à 36 % et les pectines (H. M.) de 71 à 74 %.

Le Tixosil 38A est une silice précipitée ayant une surface BET de 250 $m^2/g$ et un volume poreux pour des pores de taille variant entre 40 à 2 500 nm de 1,80 $cm^3/g$ de silice et une humidité à 105 °C inférieure à 7 %.

Le Supragil WP est un diisopropylnaphtalènesulfonate de sodium, tensio-actif anionique se présentant sous forme solide. Plus précisément, il répond à la formule $(C_3H_7)_{no}—C_{10}H_{7-no}SO_3Na$ avec no = 1,8.

La préparation des compositions est effectuée selon les conditions précédemment décrites.

2) Préparation des sols

On prépare des sols avec les compositions prédéfinies avec une teneur constante en gomme de 1 %.

On effectue une série d'essais témoins dans lesquels il n'y a que de la gomme hydrosoluble (essais A à F).

Les conditions opératoires de préparation des sols sont celles données avant la description des exemples.

3) Mesures des viscosités

On détermine la viscosité des sols obtenus avec les compositions de l'invention et les différentes gommes hydrosolubles.

Les mesures de viscosités sont faites à 23 °C à l'aide d'un viscosimètre Brookfield, modèle RV à la vitesse de 10 tours/minute avec le plongeur n° 1.

Les mesures sont effectuées après 10, 30 et 60 minutes d'agitation.

Les résultats obtenus sont rassemblés dans le tableau I pour les compositions de l'invention et dans le tableau II pour les gommes seules.

Il ressort de l'analyse comparative des tableaux I et II, que la mise des gommes naturelles sous la forme des compositions de l'invention améliore dans tous les cas la dispersion de la gomme en milieu aqueux et a un effet positif sur la vitesse de dissolution de la gomme de caroube et un léger effet sur les pectines.

(Voir Tableaux I et II pages 11 et 12)

Tableau I

Mesures des viscosités en mPa · s (viscosimètre Brookfield, modèle RV — 10 tours/minute — plongeur n° 1) — Aspect des solutions

| Références | Exemple 1 | Exemple 2 | Exemple 3 | Exemple 4 | Exemple 5 | Exemple 6 |
|---|---|---|---|---|---|---|
| Nature de la gomme | Alginate de sodium | Gomme arabique | Gomme adragante | Gomme de caroube | Pectine (L.M.) | Pectine (H.M.) |
| Durée d'agitation | | | | | | |
| 10 minutes | non mesurable | 5 | 34 | 105 | 40 | 40 |
| 30 minutes | 10 | 5 | 30 | 207 | 40 | 45 |
| 60 minutes | 10 | 5 | 32,5 | 275 | 40 | 45 |
| Observations | bonne dispersion, se mouille bien, dissolution env. 15-20 min, solution opaque jaune brun | dispersion facile, dissolution totale en 6-8 min | dispersion aisée, bonne mouillabilité, dissolution en 15 min, solution opaque | bonne dispersion se mouille bien, quelques grumeaux, dissolution. très longue, solution opaque | dispersion très bonne, se mouille très bien, dissolution en 10 min, solution jaune opaque | dispersion très bonne, petits grumeaux, dissolution en 60 min, solution jaune |

Tableau II

Mesures des viscosités en mPa · s (viscosimètre Brookfield, modèle RV — 10 tours/minute — plongeur n° 1) — Aspect des solutions

| Références | Essai A | Essai B | Essai C | Essai D | Essai E | Essai F |
|---|---|---|---|---|---|---|
| Nature de la gomme | Alginate de sodium | Gomme arabique | Gomme adragante | Gomme de caroube | Pectine (L.M.) | Pectine (H.M.) |
| Durée d'agitation | | | | | | |
| 10 minutes | non mesurable | 0 | | 90 | | |
| 30 minutes | 10 | 0 | 38 | 180 | 30 | 38 |
| 60 minutes | 10 | 0 | | 270 | 32,5 | 46 |
| Observations | bonne dispersion, se mouille bien, dissolution env. 20-30 min, solution claire transparente jaune brun | dispersion difficile, reste en surface, se mouille très mal, dissolution totale en 10-12 min | dispersion difficile, se mouille très mal, dissolution en 60 min | bonne dispersion, se mouille bien, quelques grumeaux dissolution très longue après 24 h, la viscosité croît toujours, solution opaque | dispersion très mauvaise ne se mouille pas du tout nécessité de brassage à la spatule, dissolution en 30 min, lorsque la poudre est mouillée | dispersion très mauvaise, mauvaise mouillabilité mélange à la spatule, gros grumeaux, dissolution en 60 min, lorsque la poudre est mouillée |

Exemples 7 et 8

Essais G et H

Dans les exemples suivants, on met en œuvre des gommes synthétiques : l'une de type cationique, un homopolymère du chlorure de méthacrylate d'éthyltriméthylammonium (Flocogil C4) : l'autre de type anionique, un copolymère d'acide acrylique et d'acrylamide (Flocogil AD37).

1) Préparation des compositions à base de gommes synthétiques

Les deux polymères sont formulés dans les mêmes conditions que les gommes naturelles.

Leurs caractéristiques sont les suivantes :

Le Flocogil C4 est un haut polymère fortement cationique se présentant sous la forme d'une fine poudre blanche. Il est préparé conformément au procédé décrit dans le brevet français 2 348 227.

Le Flocogil AD37, est un polymère moyennement anionique de poids moléculaire élevé $6\text{-}8 \cdot 10^6$, se présentant sous la forme d'une fine poudre blanche. Il est obtenu selon le mode opératoire décrit dans le brevet français 2 348 227.

2) Préparation des sols

On prépare de manière identique aux exemples précédents des sols avec les compositions de l'invention à une teneur exprimée en poids de polymères de 0,5 % pour l'homopolymère de chlorure de méthacrylate d'éthyltriméthylammonium et 1 % pour le copolymère d'acide acrylique et d'acrylamide.

On confectionne en parallèle, des sols ne contenant que la gomme synthétique.

3) Mesure des viscosités

La viscosité des différents sols est mesurés après 5, 15, 30 et 60 minutes avec un viscosimètre Brookfield modèle RV à la vitesse de 10 tours/minute et avec le plongeur n° 2.

Les résultats obtenus avec les compositions de l'invention sont rassemblés dans le tableau III et ceux des essais témoins dans le tableau IV.

Tableau III

Mesures des viscosités en mPa · s (viscosimètre Brookfield, modèle RV — 10 tours/minute — plongeur n° 2) Aspect des solutions

| Références | Exemple 7 | Exemple 8 |
|---|---|---|
| Nature de la gomme | Homopolymère du chlorure de méthacrylate d'éthyltri-méthylammonium | Copolymère d'acide acrylique et d'acrylamide |
| Durée d'agitation | | |
| 5 minutes | 820 | 1 660 |
| 15 minutes | 960 | 2 220 |
| 30 minutes | | 2 200 |
| 60 minutes | 720 | 1 960 |
| Observations | dispersion très bonne, dissolution en 5 min, solution blanche opaque | dispersion très bonne, dissolution en 15 min, solution opaque |

(Voir Tableau IV page 14)

Tableau IV

Mesures des viscosités en mPa · s (viscosimètre Brookfield, modèle RV — 10 tours/minutes — plongeur n° 2) Aspect des solutions

| Références | Essai G | Essai H |
|---|---|---|
| Nature de la gomme | Homopolymère du chlorure de méthacrylate d'éthyltri-méthylammonium | Copolymère d'acide acrylique et d'acrylamide |
| Durée d'agitation | | |
| 5 minutes | 80 | |
| 15 minutes | 290 | |
| 30 minutes | 300 | 780 |
| 60 minutes | | 960 |
| Observations | très mauvaise dispersion, le produit reste en surface, dissolution en 45 min, solution claire limpide | très mauvaise dispersion, le produit reste en surface, dissolution en 30 min après mouillage du produit |

On remarque donc d'après les tableaux III et IV, une amélioration de la mise en dispersion de la gomme synthétique et une augmentation de sa vitesse de dissolution lorsqu'elle est formulée selon l'invention.

**Revendications**

1. Compositions à base de gomme hydrosoluble contenant un additif facilitant sa dissolution, caractérisées par le fait qu'elles comprennent une gomme hydrosoluble choisie dans le groupe des gommes naturelles, des gommes naturelles modifiées, des polymères synthétiques à l'exclusion des biogommes et un matériau apportant l'eau qui peut être soit de l'eau liée ou d'adsorption, soit de l'eau de cristallisation, la quantité d'eau apportée par le matériau apportant l'eau étant telle que le rapport pondéral gomme/eau est comprise entre 6,5 et 1 et le rapport pondéral matériau apportant l'eau (en sec)/eau est comprise entre 0,3 et 2,6.

2. Compositions selon la revendication 1 caractérisées par le fait que la gomme hydrosoluble est une gomme naturelle telle que : agar-agar, alginates, carraghénates, gomme arabique, gomme adragante, gomme de caroube, gomme de guar, pectine ou gélatine.

3. Compositions selon la revendication 1 caractérisées par le fait que la gomme hydrosoluble est un dérivé cellulosique tel que la méthylcellulose, l'éthylcellulose, l'hydroxyéthylcellulose, l'hydroxypropylcellulose, l'éthylhydroxyéthylcellulose, la carboxyméthylcellulose de sodium, la carboxyméthylhydroxyéthylcellulose de sodium.

4. Compositions selon la revendication 1 caractérisées par le fait que la gomme hydrosoluble est une gomme synthétique telle que : les alcools polyvinyliques ; les polyvinylpyrrolidones ; les éthers méthyliques de polyvinyle ; les acides polyacryliques et polyméthacryliques, leurs sels ou leurs esters ; les polyacrylamides et les polyméthacrylamides ; les polymères d'oxyde d'éthylène ainsi que les dérivés de ces polymères.

5. Compositions selon la revendication 1 caractérisées par le fait que la gomme hydrosoluble est une gomme synthétique obtenue par polymérisation ou copolymérisation des monomères suivants : acrylamide, méthacrylamide, acrylonitrile, méthacrylonitrile, acides acrylique et méthacrylique, leurs sels et esters, acrylates et méthacrylates d'aminoalcoyle éventuellement quaternisés.

6. Compositions selon l'une des revendications 1 à 5, caractérisées par le fait que le matériau apportant l'eau est une silice fine précipitée, un gel de silice hydraté, un gel de silice deshydraté, un hydrate d'alumine sous forme naturelle ou synthétique, une argile, une zéolithe naturelle ou synthétique, un hydrate de sels minéraux ou organiques.

7. Compositions selon l'une des revendications 1 à 6, caractérisées par le fait que le matériau apportant l'eau est une silice fine précipitée ayant une surface BET et 200 à 400 $m^2/g$ et un diamètre de particules variant de 20 à 80 nm ou un hydrate des sels suivants mis en œuvre seuls, en mélange ou sous forme de combinaisons : les carbonates, les halogénures, les nitrates, les phosphates, les silicates, les sulfates ainsi que les acétates, les citrates, les lactates, les laurates, les tartrates des sels de sodium, potassium, calcium, magnésium.

8. Compositions selon l'une des revendications 1 à 7, caractérisées par le fait que le matériau apportant l'eau est une silice fine précipitée capable d'adsorber 2 ou 3 fois son poids d'eau.

9. Compositions selon l'une des revendications 1 à 8, caractérisées par le fait qu'elles comprennent en outre un tensio-actif anionique et/ou non ionique.

10. Compositions selon la revendication 9, caractérisées par le fait que le tensio-actif est un tensio-actif anionique comme des savons de métaux alcalins, les sulfonates alcalins, les sulfates et produits sulfatés, les phosphates alcalins et/ou un tensio-actif non ionique comme les alcoylphénols polyoxyéthylénés, les alcools aliphatiques polyoxyéthylénés, les amides gras, les dérivés polyoxyéthylénés et polyoxypropylénés.

11. Compositions selon la revendication 10 caractérisées par le fait que le tensio-actif est un alcoylsulfosuccinate de sodium, un alcoylnaphtalènesulfonate de sodium, une oléfine sulfonée.

12. Compositions selon l'une des revendications 10 et 11, caractérisées par le fait que le tensio-actif est un diisopropylnaphtalènesulfonate de sodium.

13. Compositions selon l'une des revendications 1 à 12, caractérisées par le fait que la quantité d'eau présente dans le matériau apportant l'eau est telle que le rapport pondéral (gomme/eau) varie de 2,5 à 1.

14. Compositions selon l'une des revendications 1 à 13 caractérisées par le fait que la quantité de matériau apportant l'eau est telle que le rapport pondéral (matériau apportant l'eau (en sec)/eau) varie de 0,3 à 0,6.

15. Compositions selon l'une des revendications 1 à 14, caractérisées par le fait que la quantité de tensio-actif est telle que le rapport entre le poids de tensio-actif et le poids total de la composition varie entre 0 et 0,10 de préférence entre 0,03 et 0,07.

16. Compositions selon l'une des revendications 1 à 15 caractérisées par le fait qu'elles renferment :

de 30 à 70 % en poids de gomme hydrosoluble
de 7 à 40 % en poids de matériau apportant l'eau
de 0 à 10 % en poids de tensio-actif anionique et/ou non ionique.
de 15 à 37 % en poids d'eau.

17. Compositions selon la revendication 16 caractérisées par le fait qu'elles renferment :

de 50 à 60 % en poids de gomme hydrosoluble
de 8 à 15 % en poids d'un matériau apportant l'eau
de 3 à 7 % en poids d'un tensio-actif anionique et/ou non ionique.
de 24 à 36 % en poids d'eau.

18. Procédé de préparation des compositions décrites dans l'une des revendications 1 à 17 caractérisé par le fait qu'il consiste à mélanger à sec le matériau apportant l'eau sur lequel éventuellement on a adsorbé de l'eau, avec la gomme éventuellement à ajouter un tensio-actif anionique et/ou non ionique.

19. Procédé selon la revendication 18 caractérisé par le fait que l'on ajoute le tensio-actif solide au mélange constitué par le matériau apportant l'eau et la gomme.

20. Procédé selon la revendication 18 caractérisé par le fait que l'on adsorbe le tensio-actif liquide sur le matériau apportant l'eau simultanément ou successivement à l'eau puis on effectue le mélange avec la gomme.

21. Sols obtenus par la mise en solution aqueuse des compositions décrites dans l'une des revendications 1 à 17.

22. Sols selon la revendication 21 caractérisé par le fait que la concentration du sol en composition de l'invention exprimée en gomme varie de 0,3 à 10 %.

**Claims**

1. Compositions based on water-soluble gum containing an additive which facilitates its dissolution, characterized in that they comprise a water-soluble gum chosen from the group consisting of natural gums, modified natural gums and synthetic polymers excluding biogums, and a material providing water, which can be either bound or adsorbed water or water of crystallization, the amount of water provided by the material providing water being such that the weight ratio gum/water is between 6.5 and 1 and the weight ratio material providing water (dry material)/water is between 0.3 and 2.6.

2. Compositions according to Claim 1, characterized in that the water-soluble gum is a natural gum such as agar-agar, alginates, carragheenates, gum arabic, gum tragacanth, carob gum, guar gum, pectin or gelatin.

3. Compositions according to Claim 1, characterized in that the water-soluble gum is a cellulose derivative such as methylcellulose, ethylcellulose, hydroxyethylcellulose, hydroxypropylcellulose, ethylhydroxyethylcellulose, sodium carboxymethylcellulose or sodium carboxymethylhydroxyethylcellulose.

4. Compositions according to Claim 1, characterized in that the water-soluble gum is a synthetic gum such as : polyvinylalcohols ; polyvinylpyrrolidones ; methyl polyvinyl ethers ; polyacrylic and polymethacrylic acids, their salts or their esters ; polyacrylamides and polymethacrylamides ; polymers of ethylene oxide and also derivatives of these polymers.

5. Compositions according to Claim 1, characterized in that the water-soluble gum is a synthetic gum obtained by polymerization or copolymerization of the following monomers : acrylamide, methacrylamide, acrylonitrile, methacrylonitrile, acrylic and methacrylic acids, their salts and esters, and optionally quaternized aminoalkyl acrylates and methacrylates.

6. Compositions according to one of Claims 1 to 5, characterized in that the material providing water is a precipitated fine silica, a hydrated silica gel, a dehydrated silica gel, a hydrate of alumina in natural or synthetic form, a clay, a natural or synthetic zeolite or a hydrate of inorganic or organic salts.

7. Compositions according to one of Claims 1 to 6, characterized in that the material providing water is a precipitated fine silica having a BET surface area of 200 to 400 $m^2/g$ and a particle diameter varying from 20 to 80 nm, or a hydrate of the following salts which are employed alone, mixed or in the form of combinations : sodium, potassium, calcium and magnesium carbonates, halides, nitrates, phosphates, silicates, sulphates and also acetates, citrates, lactates, laurates and tartrates.

8. Compositions according to one of Claims 1 to 7, characterized in that the material providing water is a precipitated fine silica capable of adsorbing 2 or 3 times its own weight of water.

9. Compositions according to one of Claims 1 to 8, characterized in that they contain, in addition, an anionic and/or nonionic surfactant.

10. Compositions according to Claim 9, characterized in that the surfactant is an anionic surfactant such as alkali metal soaps, alkali metal sulphonates, sulphates and sulphated products and alkali metal phosphates, and/or a nonionic surfactant such as polyoxyethylenated alkylphenols, polyoxyethylenated aliphatic alcohols, fatty amides and polyoxyethylenated and polyoxypropylenated derivatives.

11. Compositions according to Claim 10, characterized in that the surfactant is a sodium alkyl sulphosuccinate, a sodium alkylnaphthalenesulphonate or a sulphonated olefin.

12. Compositions according to one of Claims 10 and 11, characterized in that the surfactant is a sodium diisopropylnaphthalenesulphonate.

13. Compositions according to one of Claims 1 to 12, characterized in that the amount of water present in the material providing water is such that the weight ratio (gum/water) varies from 2.5 to 1.

14. Compositions according to one of Claims 1 to 13, characterized in that the amount of material providing water is such that the weight ratio [material providing water (dry material)/water] varies from 0.3 to 0.6.

15. Compositions according to one of Claims 1 to 14, characterized in that the amount of surfactant is such that the ratio between the weight of surfactant and the total weight of the composition varies between 0 and 0.10, and preferably between 0.03 and 0.07.

16. Compositions according to one of Claims 1 to 15, characterized in that they contain :

from 30 to 70 % by weight of water-soluble gum
from 7 to 40 % by weight of material providing water
from 0 to 10 % by weight of anionic and/or non-ionic surfactant
from 15 to 37 % by weight of water.

17. Compositions according to Claim 16, characterized in that they contain :

from 50 to 60 % by weight of water-soluble gum
from 8 to 15 % by weight of a material providing water
from 3 to 7 % by weight of an anionic and/or non-ionic surfactant
from 24 to 36 % by weight of water.

18. Process for preparing the compositions described in one of Claims 1 to 17, characterized in that it consists in dry mixing the material providing water, on which material, where appropriate, water has been adsorbed, with the gum and, where appropriate, in adding an anionic and/or nonionic surfactant.

19. Process according to Claim 18, characterized in that the solid surfactant is added to the mixture consisting of the material providing water and the gum.

20. Process according to Claim 18, characterized in that the liquid surfactant is adsorbed on the material providing water, simultaneously with or in succession to the water, and mixing with the gum is then performed.

21. Sols obtained by bringing into aqueous solution the compositions described in one of Claims 1 to 17.

22. Sols according to Claim 21, characterized in that the concentration of the composition of the invention in the sol, expressed as gum, varies from 0.3 to 10 %.

**Patentansprüche**

1. Massen auf der Basis eines wasserlöslichen Gummis enthaltend einen Zusatz, der dessen

Auflösung erleichtert, dadurch gekennzeichnet, daß sie einen wasserlöslichen Gummi ausgewählt aus der Gruppe der Pflanzengummen, modifizierten Pflanzengummen und der synthetischen Polymeren ausgenommen Biogummen sowie ein Material umfassen, das das Wasser liefert, das entweder gebundenes oder adsorbiertes Wasser oder Kristallwasser sein kann, wobei die durch das wasserliefernde Material gelieferte Menge Wasser soviel beträgt, daß das Gewichtsverhältnis Gummi/Wasser 6,5 bis 1 und das Gewichtsverhältnis von Trockenmasse des wasserliefernden Materials/Wasser 0,3 bis 2,6 beträgt.

2. Massen nach Anspruch 1, dadurch gekennzeichnet, daß der wasserlösliche Gummi ein Pflanzengummi ist, wie Agar-Agar, Alginate, Carraghenate, Gummi arabicum, Traganth, Carubagummi, Guargummi, Pektin oder Gelatine.

3. Massen nach Anspruch 1, dadurch gekennzeichnet, daß der wasserlösliche Gummi ein Cellulosederivat ist, wie Methylcellulose, Ethylcellulose, Hydroxyethylcellulose, Hydroxypropylcellulose, Ethylhydroxyethylcellulose, Natrium-carboxymethylcellulose und Natrium-carboxymethyl-hydroxyethylcellulose.

4. Massen nach Anspruch 1, dadurch gekennzeichnet, daß der wasserlösliche Gummi ein synthetischer Gummi ist, wie die Polyvinylalkohole, Polyvinylpyrrolidone, Polyvinylmethylether, Polyacrylsäuren und Polymethacrylsäuren, deren Salze oder Ester, Polyacrylamide und Polymethacrylamide, Polymere von Ethylenoxid sowie die Derivate dieser Polymeren.

5. Massen nach Anspruch 1, dadurch gekennzeichnet, daß der wasserlösliche Gummi ein synthetischer Gummi ist, erhalten durch Polymerisation oder Copolymerisation der folgenden Monomeren : Acryl-amid, Methacrylamid, Acrylnitril, Methacrylnitril, Acrylsäure und Methacrylsäure, deren Salze und Ester, gegebenenfalls quaternisierte Aminoalkyl-acrylate und -methacrylate.

6. Massen nach einem der Ansprüche 1 bis 5, dadurch gekennzeichnet, daß das wasserliefernde Material eine feine gefällte Kieselsäure, ein hydratisiertes Kieselsäuregel, ein dehydratisiertes Kieselsäuregel, ein natürliches oder synthetisches Aluminiumoxidhydrat, ein Ton, ein natürlicher oder synthetischer Zeolith oder ein Hydrat von anorganischen oder organischen Salzen ist.

7. Massen nach einem der Ansprüche 1 bis 6, dadurch gekennzeichnet, daß das wasserliefernde Material eine feine gefällte Kieselsäure mit einer BET-Oberfläche von 200 bis 400 $m^2/g$ und einem Teilchendurchmesser von 20 bis 80 nm ist oder ein Hydrat der folgenden Salze, einzeln, im Gemisch miteinander oder in Form von Kombinationen eingesetzt : Carbonate, Halogenide, Nitrate, Phosphate, Silicate, Sulfate sowie Acetate, Citrate, Lactate, Laurate und Tartrate von Natrium, Kalium, Calcium und Magnesium.

8. Massen nach einem der Ansprüche 1 bis 7, dadurch gekennzeichnet, daß das wasserliefernde Material eine feine gefällte Kieselsäure ist, die das 2- oder 3-fache ihres Gewichts an Wasser adsorbieren kann.

9. Massen nach einem der Ansprüche 1 bis 8, dadurch gekennzeichnet, daß sie zusätzlich ein anionisches und/oder nicht-ionisches Tensid enthalten.

10. Massen nach Anspruch 9, dadurch gekennzeichnet, daß das Tensid ein anionisches Tensid ist, wie die Alkalimetallseifen, Alkalisulfonate, Sulfate und sulfatierte Produkte, Alkaliphosphate und/oder ein nicht-ionisches Tensid, wie die Kondensationsprodukte aus Ethylenoxid und Alkylphenolên, aus Ethylenoxid und aliphatischen Alkoholen, die Fettsäureamide und die Polyoxyethylen- und Polyoxypropylenderivate.

11. Massen nach Anspruch 10, dadurch gekennzeichnet, daß das Tensid ein Natrium-alkylsulfosuccinat, ein Natrium-alkylnapthalinsulfonat oder ein sulfoniertes Olefin ist.

12. Massen nach einem der Ansprüche 10 und 11, dadurch gekennzeichnet, daß das Tensid ein Natrium-diisopropylnapthalinsulfonat ist.

13. Massen nach einem der Ansprüche 1 bis 12, dadurch gekennzeichnet, daß die in dem wasserliefernden Material vorhandene Menge Wasser einem Gewichtsverhältnis (Gummi/Wasser) von 2,5 bis 1 entspricht.

14. Massen nach einem der Ansprüche 1 bis 13, dadurch gekennzeichnet, daß die Menge des wasserliefernden Materials einem Gewichtsverhältnis (wasserlieferndes Material, trocken/Wasser) von 0,3 bis 0,6 entspricht.

15. Massen nach einem der Ansprüche 1 bis 14, dadurch gekennzeichnet, daß die Menge an Tensid einem Verhältnis von Gewicht des Tensids zu Gesamtgewicht der Massen von 0 bis 0,10, vorzugsweise von 0,03 bis 0,07 entspricht.

16. Massen nach einem der Ansprüche 1 bis 15, dadurch gekennzeichnet, daß sie enthalten :

30 bis 70 Gew.-% wasserlöslichen Gummi,
7 bis 40 Gew.-% wasserlieferndes Material,
0 bis 10 Gew.-% anionisches und/oder nicht-ionisches Tensid,
15 bis 37 Gew.-% Wasser.

17. Massen nach Anspruch 16, dadurch gekennzeichnet, daß sie enthalten :

50 bis 60 Gew.-% wasserlöslichen Gummi,
8 bis 15 Gew.-% wasserlieferndes Material,

3 bis 7 Gew.-% anionisches und/oder nicht ionisches Tensid,
24 bis 36 Gew.-% Wasser.

18. Verfahren zur Herstellung der Massen nach einem der Ansprüche 1 bis 17, dadurch gekennzeichnet, daß man das wasserliefernde Material mit gegebenenfalls daran adsorbiertem Wasser mit dem Gummi trocken vermischt und gegebenenfalls ein anionisches und/oder nicht-ionisches Tensid zusetzt.

19. Verfahren nach Anspruch 18, dadurch gekennzeichnet, daß man das feste Tensid zu dem Gemisch bestehend aus dem wasserliefernden Material und dem Gummi gibt.

20. Verfahren nach Anspruch 18, dadurch gekennzeichnet, daß man das flüssige Tenside an das wasserliefernde Material gleichzeitig mit dem Wasser oder darauf folgend adsorbiert und dann mit dem Gummi mischt.

21. Sole erhalten durch Auflösen der Massen nach einem der Ansprüche 1 bis 17 in Wasser.

22. Sole nach Anspruch 21, dadurch gekennzeichnet, daß die Konzentration des Sols an erfindungsgemäßer Masse, bezogen auf den Gummi, 0,3 bis 10 % beträgt.